# EUROPÄISCHE PATENTSCHRIFT

(11) **EP 1 358 960 B1**
(45) Veröffentlichungstag und Bekanntmachung des Hinweises auf die Patenterteilung: **02.08.2006**
(21) Anmeldenummer: 03009285.2
(22) Anmeldetag: 24.04.2003
(51) Int. Cl.: B23B 31/00, B23B 31/20

(54) **Werkzeugträger mit einer Spannzangenaufnahme**
Tool holder with recess for mounting a collet
Porte-outil avec logement pour une pince de serrage

(30) Priorität: 02.05.2002 DE 10219600
(43) Veröffentlichungstag der Anmeldung: 05.11.2003
(73) Patentinhaber: ESA Eppinger GmbH, 73770 Denkendorf (DE)
(72) Erfinder: Neumeier, Manfred, 73733 Esslingen (DE)
(74) Vertreter: Rüger, Barthelt & Abel Patentanwälte

(56) Entgegenhaltungen:
- EP-A- 0 048 578
- DE-A- 2 113 137
- US-A- 4 958 968
- US-A- 5 775 857

## Beschreibung

Die Erfindung betrifft einen Werkzeugträger für feststehende oder umlaufende Werkzeuge, und einen Werkzeugspanneinsatz für die Verwendung in einem solchen Werkzeugträger.

Unter einem Werkzeugträger ist hierbei, um einige Beispiele zu benennen, eine Spindel, ein Futter, ein Bohrwerkzeug und dergleichen, insbesondere ein Werkzeughalter etwa nach DIN 69880 verstanden, wie er in vielfältigen Ausführungsformen für feststehende und umlaufende Werkzeuge in der Praxis bekannt ist. Werkzeughalter mit Spannzangenaufnahmen sind beschrieben, bspw. in dem DGBM 90 03 730, der EP 0 416 601 B1 und der DE 199 58 461 C1.

Spannzangenaufnahmen und die zugehörigen Spannzangen sind nach DIN 6499 genormt. Dabei gibt es Spannzangenaufnahmen bei denen die zugeordnete Spannmutter ein Außengewinde oder ein Innengewinde aufweist. Spannzangenaufnahmen und Spannzangen werden vorzugsweise zu Bohrzwecken, generell aber immer dann verwendet, wenn es auf eine sehr genaue eng tolerierte Spannung, insbesondere von Werkzeugen mit zylindrischem Schaft oder auch von zylindrischen Werkstücken ankommt. Zur Aufnahme von Stirnfräsen, Kreissägeblättern, Scheibenfräs- und Aussägewerkzeugen usw. sind meist andere, spezielle Aufnahmen erforderlich, doch können solche Werkzeuge über entsprechende Aufnahmedorne und - schäfte auch in Spannzangen gespannt werden. Bei extrem beengten Platzverhältnissen, wie sie bspw. bei NC gesteuerten Drehmaschinen mit schwenkbaren Werkzeugträgern vorliegen, sind häufig nur Spannzangenaufnahmen einsetzbar, die eine Spannmutter mit Außengewinde haben. Diese Spannmutter ist dazu bestimmt, am Außengewinde in ein der kegeligen Bohrung der Spannzangenaufnahme zugeordnetes Innengewinde eingeschraubt zu werden. Gerade aber wegen der beengten Platzverhältnisse, sind die Handhabung und insbesondere das Festziehen einer derartigen Spannmutter oft verhältnismäßig schwierig und zeitraubend. Werkzeugaufnahmen anderer Konstruktionen erfordern aber in der Regel einen höheren Platzbedarf als Spannzangenaufnahmen und sind deshalb bei beengten Platzverhältnissen, etwa im Fall von Werkzeughaltern, häufig nicht einsetzbar. Ähnliches gilt auch für die Spannsysteme, bei denen das Spannen des Werkzeugschaftes oder dergleichen von der der Werkzeugseite abgewandten Rückseite her erfolgt, etwa unter Verwendung einer in einer Arbeitsspindel angeordneten Gewindespindel. Im Falle von Werkzeughaltern, die auf einer Revolverscheibe angeordnet sind, sind Spannsysteme dieser Art grundsätzlich nicht verwendbar.

*Aus der EP A3 0048578 sind ein Werkzeughalter und ein zur Verwendung bei einem solchen Werkzeughalter bestimmtes Werkzeug bekannt, bei denen in einem Grundkörper eine kegelige Bohrung angeordnet ist, in die ein kegeliger Aufnahmezapfen eines Werkzeugs oder, über eine kegelige Büchse eine Spannzange zur Aufnahme eines zylindrischen Werkzeugschafts eingesetzt werden kann. Die Spannung des Werkzeugs erfolgt in jedem Falle mittels einer auf ein Außengewinde des Grundkörpers aufgeschraubten, nach Art einer Überwurfmutter gestalteten Spannmutter. Die Spannmutter ist mit einem Differenzgewinde versehen, das es erlaubt, beim Lösen der Spannung das Werkzeug oder die Kegelhülse aus der kegeligen Bohrung des Aufnahmekörpers heraus* zu *bewegen.*

Aufgabe der Erfindung ist es deshalb, einen Werkzeugträger mit einer axial sehr kurz bauenden Spannzangenaufnahme zu schaffen die derart gestaltet ist, dass auf engstem Raum auch andere Werkzeugaufnahmen wie eine Spannzange eingesetzt werden können, wobei eine bequeme und wirkungsvolle Spannung der Werkzeuge etc. von der Werkzeugseite des Werkzeugträgers her erfolgt.

Zur Lösung dieser Aufgabe weist der Werkzeugträger die Merkmale des Patentanspruches 1 auf.

Der zur Aufnahme einer Spannzange bestimmten und zu diesem Zweck entsprechend gestalteten kegeligen Bohrung in Werkzeugträgermitteln ist eine rechtwinklig zu der Bohrungsachse verlaufende, erste Planfläche an den Werkzeugträgermitteln zugeordnet. Außerdem sind an den Werkzeugträgermitteln Befestigungsmittel für einen mit einem kegeligen Aufnahmezapfen anstelle einer Spannzange in die kegeligen Bohrung eingesetzte Werkzeugspanneinsatz vorgesehen, wobei diese Befestigungsmittel von der Werkzeugseite her zugänglich sind.

Gegenstand der Erfindung ist auch ein Werkzeugträger, der einen mit einem kegeligen Aufnahmezapfen in die kegelige Bohrung eingesetzten Werkzeugspanneinsatz eine zweite Planfläche auf. Bei in die kegelige Bohrung eingesetztem Werkzeugspanneinsatz sind die beiden Planflächen durch die Befestigungsmittel in spielfreier Anlage aneinander gehalten.

Der Werkzeugspanneinsatz weist keinen oder einen nur sehr geringen zusätzlichen Platzbedarf in Axialrichtung auf. Er kann mit einer für den jeweiligen Anwendungszweck dienlichen Werkzeugaufnahme ausgebildet sein. Durch den der kegeligen Bohrung der Spannzangenaufnahme in den Werkzeugträgermitteln genau angepassten Aufnahmezapfen des Werkzeugspanneinsatzes und die Plananlage der beiden Planflächen an den Werkzeugträgermitteln und dem Werkzeugspanneinsatz, wird einen hochpräzise exakt lagegenaue Ausrichtung des Spanneinsatzes und dessen Werkzeugaufnahme gewährleistet. Gleichzeitig bleibt aber die Spannzangenaufnahme als solche in ihrer Form unverändert, so dass bei Bedarf auch eine Spannzange eingesetzt werden kann, um in dieser ein Werkzeug mittels der zugeordneten Spannmutter zu spannen.

Die Befestigungsmittel des Spanneinsatzes sind zweckmäßigerweise in Bereiche der ersten Planfläche an den Werkzeugträgermitteln angeordnet. Sie können Gewindebohrungen aufweisen, die, achsparallel zu der kegeligen Bohrung, in der ersten Planfläche angeordnet sind.

In einer praktischen Ausführungsform kann wenigstens eine, quer zu der Achse der kegeligen Bohrung verlaufende Querbohrung in den Werkzeugträgermitteln vorgesehen sein, durch die eine Spanneinrichtung an einem in die Spannzangenaufnahme eingesetzten Werkzeugspanneinsatz von Außen her zugänglich ist. Diese Werkzeugspanneinrichtung kann ein in eine entsprechende Gewindebohrung des Werkzeugspanneinsatzes eingeschraubte Spannschraube aufweisen, die durch die Querbohrung zugänglich ist.

Bei einer alternativen Ausführungsform kann der Werkzeugspanneinsatz auch zur Aufnahme eines Schnellwechseleinsatzes eingerichtet sein, der z.B. mit einem Schaft in den Spanneinsatz eingesetzt und der lösbar mit dem Spanneinsatz verbunden ist. Zum Spannen des Werkzeuges dient mit Vorteil eine auf ein entsprechendes Außengewindes des Spanneinsatzes aufgeschraubte Spannmutter, die im Falle eines Schnellwechseleinsatzes mit einem an dem Schnellwechseleinsatz vorgesehen geteilten Ring zusammen wirkt, der in eine entsprechende Ringnut oder Vertiefung des Schnellwechseleinsatzes eingesetzt ist.

Gegenstand der Erfindung ist auch ein Werkzeugspanneinsatz mit den Merkmalen des Patentanspruch 14 zur Verwendung in einem Werkzeugträger, wie er im vorstehenden im Zusammenhang mit der Erfindung erläutert wurde. Weiterbildungen und Ausgestaltungen des neuen Werkzeugträgers und des neuen Werkzeugspanneinsatzes sind Gegenstand von Unteransprüchen.

In der Zeichnung sind Ausführungsbeispiele des Gegenstandes der Erfindung dargestellt. Es zeigen:
- Fig. 1: einen Werkzeughalter mit einer Spannzangenaufnahme für ein Werkzeug, im axialen Schnitt in einer Seitenansicht und im Ausschnitt,
- Fig. 2: den Werkzeughalter nach Fig. 1 in einer Draufsicht auf die Werkzeugseite,
- Fig. 3: den Werkzeughalter nach Fig. 1, versehen mit einer ersten Ausführungsform eines Werkzeugspanneinsatzes gemäß der Erfindung, in einer Schnittdarstellung ähnlich Fig. 1,
- Fig. 4: den Werkzeughalter nach Fig. 1, versehen mit einer zweiten Ausführungsform eines Werkzeugspanneinsatzes gemäß der Erfindung, in einer Schnittdarstellung ähnlich Fig. 1, unter Veranschaulichung eines lediglich teilweise aufgeschnittenen Werkzeugspanneinsatzes,
- Fig. 5: den Werkzeughalter nach Fig. 1, versehen mit einer dritten Ausführungsform eines Werkzeugspanneinsatzes gemäß der Erfindung, in einer ähnlichen Schnittdarstellung,
- Fig. 6: den Werkzeughalter nach Fig. 1, versehen mit einer vierten Ausführungsform eines Werkzeugspanneinsatzes gemäß der Erfindung, in einer ähnlichen Schnittdarstellung,
- Fig. 7: den Schnellwechseleinsatz des Werkzeughalters nach Fig. 6, geschnitten längs der Linie VII-VII der Fig. 6 in einer Draufsicht und
- Fig. 8, 9: den Werkzeughalter nach Fig. 2, jeweils versehen mit einem Hakenschlüssel zum Arretieren der Spindel in dem einen bzw. in dem anderen Drehsinn.

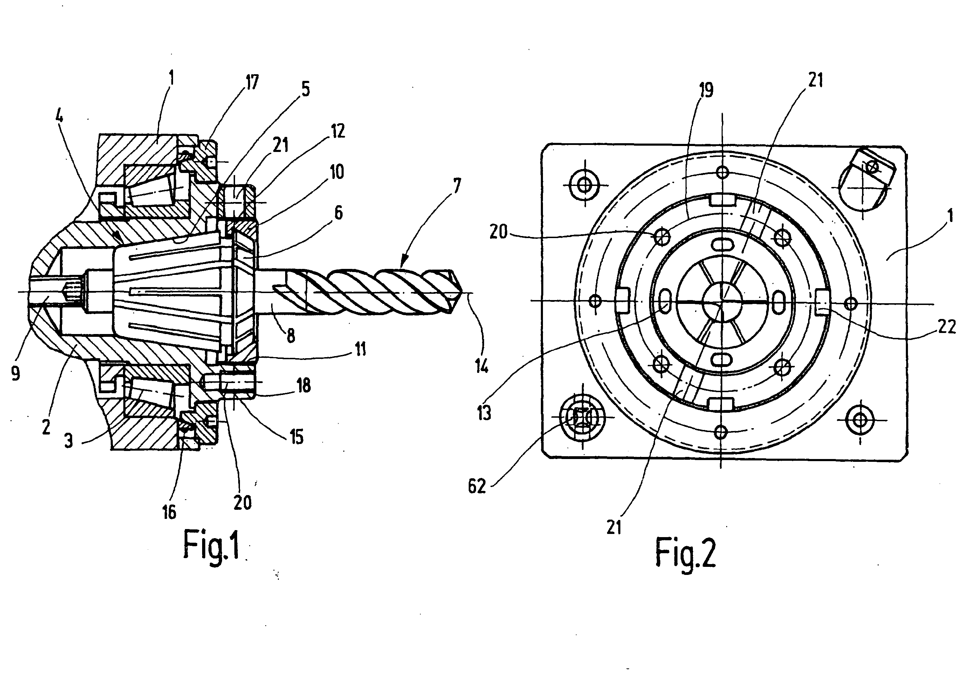

Die Figuren 1, 2 veranschaulichen einen Werkzeughalter im Ausschnitt bzw. in der Draufsicht auf die Werkzeugseite, der in der dargestellten Ausführungsform einen Werkzeugträger für umlaufende Werkzeuge bildet. Der Werkzeughalter weist ein im Wesentlichen parallelepipetförmiges Gehäuse 1 auf, in dem eine Werkzeugträgermittel bildende Spindel 2 mittels Wälzlagern 3 drehbar gelagert ist. Wegen der an sich bekannten konstruktiven Einzelheiten solcher Werkzeughalter wird verwiesen auf DIN 69880 und die DE 197 35 420 C1 sowie die DE 199 58 461 C1 der Anmelderin.

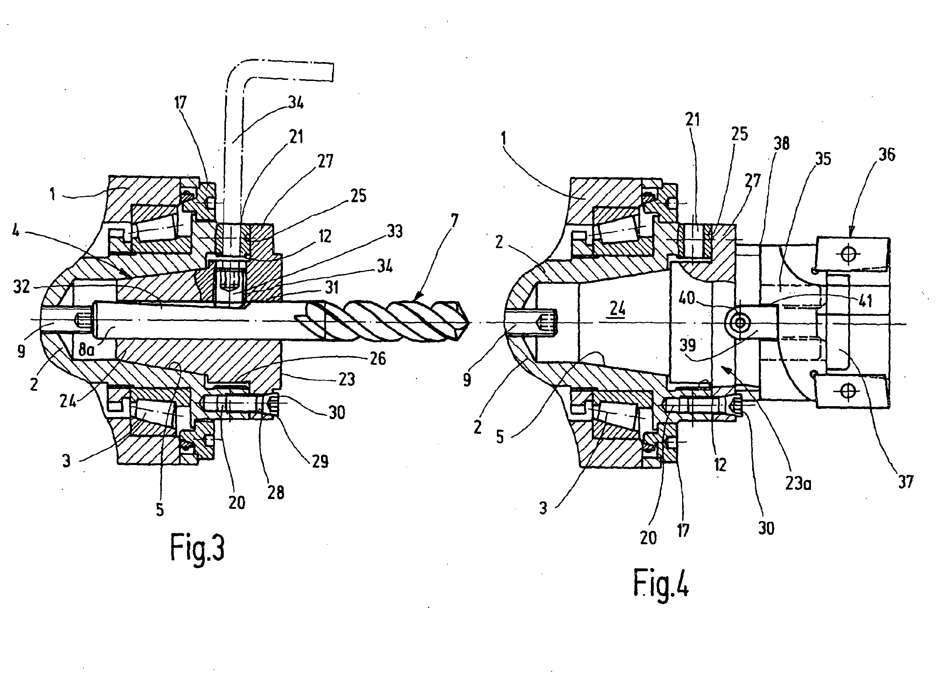

Die Spindel 2 ist mit einer Spannzangenaufnahme 4 nach DIN 6499 versehen. Die Spannzangenaufnahme 4 weist eine kegelige Bohrung 5 zur Aufnahme einer Spannzange 6 auf, die ebenfalls nach DIN 6499 gestaltet ist. In die Spannzange 6 ist ein Werkzeug 7 in Gestalt eines Spiralbohrers mit seinem zylindrischen Schaft 8 eingesetzt, der axial gegen einen in die Spindel 2 eingeschraubten, als verstellbarer Axialanschlag dienenden Gewindestift 9 abgestützt ist. Zum Spannen der Spannzange 6 dient eine Spannmutter 10 mit Außengewinde 11, die in ein entsprechendes Innengewinde 12 der Spindel 2 von der Werkzeugseite her eingeschraubt ist. Die Spannmutter 10 wirkt über eine innenliegende Kegelfläche mit einer entsprechenden Kegelfläche der Spannzange 6 zusammen, wie dies an sich bekannt ist, und entspricht im übrigen DIN 6499. Auf ihrer der Werkzeugseite zugewandten Stirnfläche ist sie mit Sacklöchern 13 (Fig. 2) versehen, die zum Ansatz eines Stirnlochschlüssels dienen, der es erlaubt, die Spannmutter 10 gegen die Spannzange 6 festzuziehen und damit den Schaft 8 des Werkzeugs 7 mittels der Spannzange 6 zu spannen. Das der kegeligen Bohrung 5 zugeordnete und zu dieser koaxiale Innengewinde 12 ist auf der Innenseite eines im Wesentlichen rohrförmigen, zu der Bohrungsachse 14 koaxialen zylindrischen Fortsatzes 15 der Spindel 2 ausgebildet, dessen das Innengewinde 12 tragende zylindrische Innenfläche sich an die kegelige Bohrung 5 zu der Werkzeugseite hin anschließt. Der zylindrische Fortsatz 15 ragt axial über das Gehäuse 1 und einen auf die Spindel 2 aufgeschraubten, das Gehäuse 1 über eine Dichtung 16 abgedichtet abschließenden Verschlussring 17 vor. Er ist auf seiner dem Werkzeug 7 zugewandten Stirnfläche mit einer fein bearbeiteten ebenen Planfläche 18 versehen, die exakt rechtwinklig zu der Bohrungsachse 14 verläuft und die im Weiteren als die erste Planfläche bezeichnet wird. Wie aus den Figuren 1, 2 zu entnehmen, sind an dem zylindrischen Fortsatz 15 innerhalb der ersten Planfläche 18 auf einem gemeinsamen Teilkreis 19 liegende Gewindebohrungen 20 vorgesehen, die Befestigungsmittel bilden und achsparallel zu der Bohrungsachse 14 ausgerichtet sind. Die Gewindebohrungen 20 sind auf dem Teilkreis 19 gleichmäßig voneinander beabstandet angeordnet. Zwischen ihnen liegen radial gerichtete Querbohrungen 21, deren Teilung gegenüber der Teilung der Gewindebohrungen 20 versetzt ist und die den zylindrischen Fortsatz 15 durchdringen. Die Querbohrungen 21, von denen bei dem dargestellten Ausführungsbeispiel zwei diametral einander gegenüberliegende Querbohrungen vorhanden sind, sind, wie ein Blick auf Fig. 3 zeigt, von außen her frei zugänglich und münden im Bereich des Innengewindes 12.

Die Spannzange 6 in Figuren 1, 2 kann zum Spannen von Werkzeugschäften 8 anderen Durchmessers durch andere dem jeweiligen Werkzeugschaftdurchmesser angepasste Spannzangen ersetzt werden. Die Verwendung einer Spannmutter 10 mit Außengewinde 11 erlaubt ersichtlich eine axial besonders kurze Bauweise, wobei der Werkzeughalter auch unter sehr beengten Platzverhältnissen, bspw. auf einer Revolverscheibe eingesetzt werden kann.

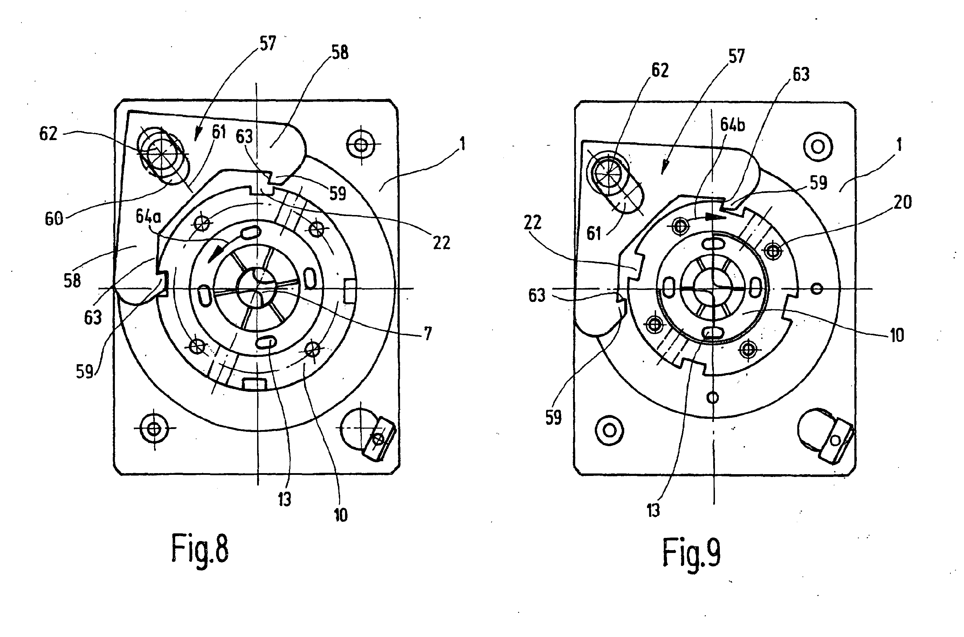

Am Umfang des zylindrischen Fortsatzes 15 der Spindel 2 sind außen gleichmäßig verteilt, vier im Querschnitt rechteckige Längsnuten 22 gleichmäßig verteilt angeordnet, die zum Ansatz eines Hakenschlüssels bspw. nach DIN 1810 dienen, der es erlaubt, die Spindel 2 beim Festziehen der Spannmutter 10 vorübergehend drehfest zu arretieren. Alternativ kann zu diesem Zweck auch mit Vorteil eine besondere Ausführungsform eines Hakenschlüssels Verwendung finden, die im Zusammenhang mit den Figuren 8, 9 im Weiteren noch erläutert werden wird.

Um ohne Veränderungen an der Spindel 2 oder der Spannzangenaufnahme 4 auch Werkzeuge spannen zu können, die nicht mit einer Spannzange gespannt werden können, wird erfindungsgemäß ein Werkzeugspanneinsatz 23 verwendet, der an die Stelle der Spannzange 6 tritt und in verschiedenen Ausführungsformen in den Figuren 3 - 7 veranschaulicht ist. Diese verschiedenen Ausführungsformen sind nur Ausführungsbeispiele, die nicht beschränkend zu verstehen sind. Abhängig von der jeweils verwendeten Spanntechnik, können die Spanneinsätze 23 auch mit anderen an sich bekannten Werkzeugaufnahmen ausgebildet sein.

Bei allen in den Figuren 3 bis 7 dargestellten Ausführungsformen ist der Werkzeughalter mit seinem Gehäuse 1 und seiner Spindel 2 gleich wie in den Figuren 1 und 2 dargestellt gestaltet. Mit den Figuren 1, 2 gleiche Teile sind deshalb mit gleichen Bezugszeichen versehen und nicht nochmals erläutert.

Bei der Ausführungsform nach Fig. 3 ist ein Spanneinsatz 23 vorgesehen, der auf einer Seite einen kegeligen Aufnahmezapfen 24 trägt, welcher einen im Wesentlichen gleichen Kegelwinkel wie die kegelige Bohrung 5 in der Spindel 2 aufweist und unter Vorspannung in diese eingesetzt ist. An dem Spanneinsatz 23 ist eine rechtwinklig zu der Längsmittelachse des Aufnahmezapfens 24 verlaufende zweite Planfläche 25 vorgesehen, die sich an den Aufnahmezapfen 24 über einen zylindrischen Abschnitt 26 anschließt, dessen axiale Länge etwas kleiner ist als die axiale Länge des rohrförmigen Fortsatzes der Spindel 2. Der zylindrische Abschnitt 26 weist einen Durchmesser auf, der kleiner ist als der Innendurchmesser des Innengewindes 12, so dass die Umfangsfläche des zylindrischen Abschnitts 26 bei in der Spannzangenaufnahme 4 montiertem Spanneinsatz 23 im radialen Abstand von dem Innengewinde 12 steht, und dieses bei der Montage des Spanneinsatzes 23 nicht beeinträchtigt werden kann.

Auf der dem Aufnahmezapfen 24 abgewandten Seite ist der zylindrische Abschnitt 26 durch einen Ringflansch 27 begrenzt, in dem durchgehende, zu der Längsmittelachse des Aufnahmezapfens 24 koaxial Befestigungsbohrungen 28 ausgebildet sind, die die gleiche Teilung wie die Gewindebohrungen 20 aufweisen und mit diesen bei in der Spannzangenaufnahme 4 montiertem Spanneinsatz 23 auf dem gleichen Teilkreisdurchmesser 19 liegen. Die Befestigungsbohrungen 28 sind mit kegeligen Ansenkungen 29 versehen und nehmen entsprechend kegelig geformte Befestigungsschrauben 30 auf, die bei eingesetztem Spanneinsatz 23 in die Gewindebohrungen 20 eingeschraubt sind. Die gemeinsam mit den Gewindebohrungen 20, den Befestigungsbohrungen 28 und den Ansenkungen 29 Befestigungsmittel bildenden Befestigungsschrauben 30 drücken die an dem Ringflansch 27 ausgebildete zweite Planfläche 25 gegen die erste Planfläche 18 der Spindel 2 spielfrei an, so dass eine exakte Ausrichtung des Werkzeugspanneinsatzes 23 bzgl. des Spindel 2 und eine formschlüssige Verbindung mit dieser gewährleistet sind. Da die axiale Dicke des Ringflansches 27 verhältnismäßig klein ist, ergibt sich im Vergleich zu Fig. 1 lediglich ein minimaler zusätzlicher axialer Platzbedarf für den Werkzeugspanneinsatz 23. Der Werkzeugspanneinsatz 23 enthält eine zylindrische Werkzeugaufnahmebohrung 31 in die der zylindrische Schaft 8a des Werkzeugs 7 eingesetzt ist. Der Werkzeugschaft 8a ist mit einer zur Werkzeugachse geneigten Spannfläche 32 versehen, auf die eine eine Spanneinrichtung bildende Spannschraube 33 einwirkt, die in eine zugeordnete radiale Gewindebohrung 34 eingeschraubt ist. Die Gewindebohrung 34 fluchtet in einer Drehstellung des Werkzeugspanneinsatzes 23 mit einer Bohrung 21 in dem zylindrischen Fortsatz 15 der Spindel 2, die es erlaubt, wie in Fig. 3 gestrichelt dargestellt, einen Innensechskant-Schlüssel 340 oder - bei entsprechender Gestaltung der Spannschraube 33 - einen Schraubendreher einzuführen, um die Spannschraube 33 festzuziehen oder zu lösen.

Bei der in Fig. 4 dargestellten Ausführungsform ist der Werkzeugspanneinsatz 23a in seinem grundsätzlichen Aufbau ähnlich wie der Spanneinsatz 23 der Fig. 3 gestaltet. Gleiche Teile sind deshalb insoweit mit gleichen Bezugszeichen versehen. Der Werkzeugspanneinsatz 23a, der in gleicher Weise wie der Spanneinsatz 23 mittels axialer Befestigungsschrauben 30 an der Spindel 2 befestigt ist, trägt einen koaxialen Fräserdorn 35 zur Aufnahme eines Aufsteckfräsers 36, der in an sich bekannter Weise mittels einer Fräseranzugsschraube 37 befestigt ist.

Bei 38 ist eine Planflächenanlage des Aufsteckfräsers 36 an einer entsprechenden maßgenauen Planfläche des Ringflansches 27 des Werkzeugspanneinsatzes 23a vorgesehen. Zur drehfesten Kupplung des Aufsteckfräsers 36 mit dem Werkzeugspanneinsatz 23a und damit der Spindel 2 dient ein Mitnehmer 39, der bei 40 mit dem Werkzeugspanneinsatz 23a verschraubt ist und der in eine entsprechende radiale Mitnehmernut 41 des Aufsteckfräsers 36 eingreift.

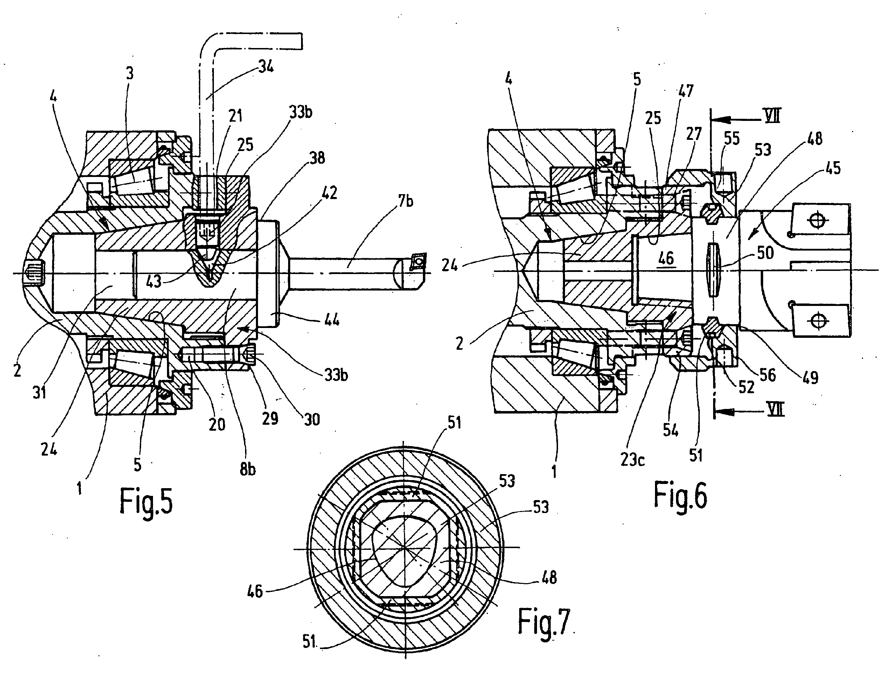

In Fig. 5 ist ein Ausführungsbeispiel dargestellt, bei dem der Werkzeugspanneinsatz 23b grundsätzlich ähnlich dem Werkzeugspanneinsatz 23 der Ausführungsform nach Fig. 3 gestaltet ist. Gleiche Teile sind deshalb wiederum mit gleichen Bezugszeichen versehen und nicht weiter erläutert. In diesem Falle ist in die Aufnahmebohrung 31 des Werkzeugspanneinsatzes 23b ein Ausdrehwerkzeug 7b mit seinem zylindrischen Schaft 8b eingesetzt, der an einer Stelle seines Umfangs eine radiale kegelige Sackbohrung 42 trägt, in die eine Spannschraube 33b mit einem kegeligen Spannzapfen 43 eingreift. Der Spannzapfen 43 ist in Achsrichtung gegen den axial über einen Flansch 44 gegen die Planfläche 38 des Werkzeugspanneinsatzes 23b abgestützten Werkzeugschaft 8b in der aus Fig. 5 ersichtlichen Weise etwas versetzt, wodurch erreicht wird, dass beim Festziehen der Spannschraube 33b der Werkzeugschaft 8b in die Aufnahmebohrung 31 hineingezogen wird, mit der Folge, dass sich bei 38 eine satte spielfreie Plananlage des Flansches 44 an der Planfläche des Werkzeugsspanneinsatzes 23b ergibt. Die Betätigung der Spannschraube 33b erfolgt wiederum durch einen Innensechskant-Hakenschlüssel 34 oder einen Schraubendreher der durch die Bohrung 21 eingeführt wird. Auch dieses Ausführungsbeispiel zeigt, dass bei minimalem Platzbedarf handelsübliche Werkzeugsysteme, die bei bestimmten Bearbeitungsaufgaben gewisse Vorteile aufweisen, mit wenig Aufwand in der vorhandenen Spannzangenaufnahme 4 der Spindel 2 gespannt werden können.

In den Figuren 6, 7 schließlich ist noch eine weitere abgewandelte Ausführungsform eines Werkzeugspanneinsatzes 23c veranschaulicht, der in seinem grundsätzlichen Aufbau ebenfalls dem Werkzeugspanneinsatz 23 nach Fig. 3 entspricht. Gleiche Teile sind deshalb auch hier mit gleichen Bezugszeichen versehen und nicht nochmals erläutert. Der Werkzeugspanneinsatz 23c ist zur Aufnahme eines Fräser-Schnellwechseleinsatzes 45 bestimmt. Der Werkzeugschnellwechseleinsatz 45 trägt einen koaxialen, im Querschnitt als Polygon ausgebildeten Aufnahmeschaft 46, der in eine entsprechende polygonale Werkzeugaufnahme 47 des Werkzeugspanneinsatzes 23c eingefügt ist. An den Aufnahmeschaft 46 schließt sich in Achsrichtung ein zylindrischer Abschnitt 48 an, der auf seiner außenliegenden Stirnseite durch eine Radialschulter 49 begrenzt ist. Der Abschnitt 48 ist mit vier ebenen Greiferrillen 50 versehen, in die die Teile eines zweigeteilten Ringes 51 eingreifen, dessen Innenform der Innenform der Greiferrillen 50 angepasst ist. Die zwei Teile des geteilten Rings 51 sind durch ein elastisches Element, z.B. einen Rundschnurring 52, in den Greiferrillen 50 gehalten.

Auf den außen durch Kegelflächen begrenzten geteilten Ring 51 wirkt eine Spannmutter 53, die als Überwurfmutter ausgebildet und auf ein entsprechendes Außengewinde 54 des Ringflansches 27 des Werkzeugspanneinsatzes 23c aufgeschraubt ist.

Die Spannmutter 53 drückt den Werkzeugschnellwechseleinsatz 45 über den geteilten Ring 51 und die Greiferillen 50 in die Schnellwechselaufnahme 47. In der Spannmutter 53 vorgesehen Radialbohrungen 55 dienen zum Ansatz eines Hakenschlüssels um die Spannmutter 53 auf dem Ringflansch 27 festzuziehen.

Beim Lösen der Spannmutter 53 läuft diese beim Herausdrehen aus dem Außengewinde 54 mit ihrer Stirnfläche 56 auf die Schulterfläche 49 des Schnellwechseleinsatzes 45 auf, so dass dieser aus der Schnellwechselaufnahme 47 herausgedrückt wird.

Die Greiferrillen 50 dienen im übrigen in an sich bekannter Weise zum Ansatz eines Werkzeuggreifers beim automatischen Wechseln des Schnellwechseleinsatzes 45, wenn dieser in einer anderen Werkzeugaufnahme eingesetzt wird.

Beim Festziehen der Spannmutter 53 zum Spannen des Schnellwechseleinsatzes 45 muss die Spindel 2 vorübergehend drehfest arretiert werden. Dies gilt im gleichen Maße auch für die Verhältnisse beim Festziehen der das Außengewinde 11 tragenden Spannmutter 10, wenn wie in Fig. 1 dargestellt, in die Spannzangenaufnahme 4 der Spindel 2 eine Spannzange 6 eingesetzt ist. Wie bereits erwähnt, kann zu diesem Zweck ein Hakenschlüssel nach DIN 1810 verwendet werden, der in eine der Umfangsnuten 22 des zylindrischen Fortsatzes 15 der Spindel 2 eingesetzt ist. Eine wesentliche Erleichterung der Betätigung der Spannmutter 53 bzw. 10 lässt sich aber durch Verwendung eines Doppelhakenschlüssels 57 erzielen, wie er in den Figuren 8, 9 im Zusammenhang der Anordnung nach Fig. 2 veranschaulicht ist. Der Doppelhakenschlüssel 57 weist eine im Wesentlichen L-förmige Gestalt mit zwei rechtwinklig zueinander verlaufenden Schenkeln 58 auf, von denen jeder endseitig eine nach innen weisende Nase 59 trägt. Symmetrisch zwischen den beiden Schenkeln 58 ist ein Langloch 60 vorgesehen, das mit seiner Längsachse auf der Winkelhalbierenden 61 des von den beiden Schenkeln 58 eingeschlossenen Rechten Winkels liegt. Mit dem Langloch 60 ist der Doppelhakenschlüssel 57 auf einen Gewindebolzen 62 aufgesteckt, der über die ebene Stirnseite des Gehäuses 1 des Werkzeughalters vorragend vorgesehen ist. Der Abstand beider Hakennasen 59 ist auf die Teilung der Umfangsnuten 22 des zylindrischen Spindelfortsatzes 15 so abgestimmt, dass, wie aus den Figuren 8, 9 zu ersehen, jeweils lediglich eine Hakennase 59 in eine Umfangsnut 22 eingreift, während die andere Hakennase auf der zylindrischen Umfangsfläche des Fortsatzes 15 aufliegt.

Abhängig davon, welche der beiden Hakennasen 59 mit einer Sperrfläche 63 in eine der Umfangsnuten 22 eingreift, wird die Spindel 2 in dem einen oder dem anderen Drehsinn arretiert, wie in dies aus den Figuren 8, 9 ohne weiteres verständlich ist, in denen der Drehsinn der Spindel 2 in dem die Spindel arretiert ist, jeweils durch einen Pfeil 64a bzw. 64b angedeutet ist. Durch die beim Spannen oder Entspannen der Spannmutter 10 (bzw. 53 in Fig. 6) auftretenden Hebelkräfte auf den Gewindebolzen 62 bleibt der Doppelhakenschlüssel 57 beim Betätigen der Spannmutter in oder gegen den Uhrzeigersinn in die zugeordnete Umfangsnut 22 eingehängt, insbesondere wenn der Werkzeughalter, wie in Fig. 1 dargestellt, mit horizontaler Gebrauchslage der Werkzeugachse 14 verwendet wird, so dass der Doppelhakenschlüssel 57 in einer vertikalen Ebene liegt.

Der besondere Vorteil des Hakenschlüssels 57 ergibt sich aus der Tatsache, dass zur Betätigung der Spannmutter 10 oder 53 beide Hände frei sind. Die Spannmutter kann da durch gleichmäßig angezogen oder gelöst werden. Eine Verletzungsgefahr durch Abrutschen mit dem Hakenschlüssel in einer messerscharfen und öligen Umgebung ist auf diese Weise weitgehend gebannt. Durch das gleichmäßige Anziehen der Spannmutter 10 bzw. 53 wird das Spannergebnis deutlich verbessert.

## Patentansprüche

1. Werkzeugträger für feststehende oder umlaufende Werkzeuge,
- mit einer an Werkzeugträgermitteln ausgebildeten Spannzangenaufnahme (4) für eine Spannzange (6) zum Spannen eines Werkzeugschaftes (8) von der Werkzeugseite her, wobei die Spannzangenaufnahme (4) eine kegelige Bohrung (5) zur Aufnahme einer Spannzange (6) und ein der Bohrung zugeordnetes koaxiales Innengewinde (12) zur Aufnahme einer ein Außengewinde aufweisenden Spannmutter (10) aufweist,
- mit einer der kegeligen Bohrung (5) zugeordneten, exakt rechtwinklig zu der Bohrungsachse (14) verlaufenden,feinbearbeiteten, ersten Planfläche (18) an den Werkzeugträgermitteln (2), die im axialen Abstand von der kegeligen Bohrung (5) angeordnet ist, und
- mit von dem Innengewinde (12) unabhängigen Befestigungsmitteln (20) an den Werkzeugträgermitteln für einen mit einem kegeligen Aufnahmezapfen (24) an Stelle einer Spannzange (6) in die kegelige Bohrung (5) eingesetzten Werkzeugspanneinsatz (23), wobei die Befestigungsmittel von der Werkzeugseite her zugänglich sind.

2. Werkzeugträger nach Anspruch 1, **dadurch gekennzeichnet, dass** in die kegelige Bohrung (5) ein kegeliger Aufnahmezapfen (24) eines Werkzeugspanneinsatzes (23) eingesetzt ist und der Werkzeugspanneinsatz (23) durch Befestigungsmittel (20, 28, 30) an den Werkzeugträgermitteln (2) lösbar befestigt ist.

3. Werkzeugträger nach Anspruch 2, **dadurch gekennzeichnet, dass** der Werkzeugspanneinsatz (23) eine zweite Planfläche (25) aufweist und dass bei mit seinem Aufnahmezapfen (23) in die kegelige Bohrung (5) eingesetztem Werkzeugspanneinsatz (23) die beiden Planflächen (18, 25) durch die Befestigungsmittel (20) in spielfreier Anlage gegeneinander gehalten sind.

4. Werkzeugträger nach einem der vorhergehenden Ansprüche, **dadurch gekennzeichnet, dass** die Befestigungsmittel (20) im Bereiche der ersten Planfläche (18) angeordnet sind.

5. Werkzeugträger nach Anspruch 4, **dadurch gekennzeichnet, dass** die Befestigungsmittel Gewindebohrungen (20) aufweisen, die achsparallel zu der kegeligen Bohrung (5) in der ersten Planfläche (18) angeordnet sind.

6. Werkzeugträger nach einem der Ansprüche 2 bis 5, **dadurch gekennzeichnet, dass** wenigstens eine quer zu der Achse (14) der kegeligen Bohrung (5) verlaufende Querbohrung (21) in den Werkzeugträgermitteln vorgesehen ist.

7. Werkzeugträger nach Anspruch 6, **gekennzeichnet durch** wenigstens eine quer zu der Achse des Aufnahmezapfens (24) verlaufende Werkzeugspanneinrichtung (33), die von außen her betätigbar an dem Werkzeugspanneinsatz (23) angeordnet ist.

8. Werkzeugträger nach den Ansprüchen 6 und 7, **dadurch gekennzeichnet, dass** die Werkzeugspanneinrichtung eine in eine entsprechende Gewindebohrung (34) des Werkzeugspanneinsatzes (23) eingeschraubte Spannschraube (33) aufweist, die durch die Querbohrung (21) zugänglich ist.

9. Werkzeugträger nach Anspruch 8, **dadurch gekennzeichnet, dass** die Spannschraube (33b) einen konischen Spannzapfen (43) trägt.

10. Werkzeugträger nach Anspruch 2 oder 3, **dadurch gekennzeichnet, dass** der Werkzeugspanneinsatz (23c) ein Außengewinde (54) trägt, auf das eine Spannmutter (53) einer Spanneinrichtung an dem Werkzeugspanneinsatz (23c) aufgeschraubt ist.

11. Werkzeugträger nach Anspruch 2 oder 3, **dadurch gekennzeichnet, dass** der Werkzeugspanneinsatz zur Aufnahme eines Schnellwechseleinsatzes (45) eingerichtet ist, der mit einem Schaft (46) in den Spanneinsatz (23c) eingesetzt und der lösbar mit dem Spanneinsatz verbunden ist.

12. Werkzeugträger nach den Ansprüchen 10 und 11, **dadurch gekennzeichnet, dass** der Schnellwechseleinsatz (45) einen geteilten Ring (51) trägt, auf den eine auf ein entsprechendes Außengewinde (54) des Spanneinsatzes (23c) aufgeschraubte Spannmutter (53) einwirkt.

13. Werkzeugträger nach einem der vorhergehenden Ansprüche, **dadurch gekennzeichnet, dass** er als Werkzeughalter ausgebildet ist.

14. Werkzeugspanneinsatz für die Verwendung in einem Werkzeugträger nach einem der vorherigen Ansprüche, mit
- einem kegeligen Aufnahmezapfen (24) mit einem Kegelwinkel zum Einsetzen in eine kegelige Aufnahmebohrung einer Spannzangenaufnahme,
- einer rechtwinklig zu der Längsmittelachse des Aufnahmezapfens verlaufenden, feinbearbeiteten Planfläche (25), die an einem über den Aufnahmezapfen radial vorstehenden Teil (27) auf dessen dem Aufnahmezapfen (24) zugewandten Seite angeordnet ist,
- Befestigungsmitteln (28,29) für den Werkzeugspanneinsatz, die an dem radial vorstehenden Teil angeordnet sind und
- einer von radial außen her betätigbaren Werkzeugspanneinrichtung (33,34), die an dem Werkzeugspanneinsatz in einem Bereich auf der dem Aufnahmezapfen zugewandten Seite der Planfläche (25) angeordnet ist.

## Claims

1. Tool support for stationary or rotating tools,
• with a collet chuck seating (4) configured on tool support elements for a collet chuck (6) for clamping a tool shaft (8) from the tool side,
wherein the collet chuck seating (4) has a conical bore (5) to receive a collet chuck (6) and a coaxial internal thread (12) associated with the bore to receive a clamping nut(10) having an external thread,
• with a fine-machined first end face (18), which is associated with the conical bore (5) and runs exactly at a right angle to the bore axis (14) on the tool support elements (2) and which is axially spaced from the conical bore (5), and
• with fastening elements (20) independent of the internal thread (12) on the tool support elements for a tool clamp insert (23) inserted into the conical bore (5) with a conical seating journal (24) in place of a collet chuck (6), wherein the fastening elements are accessible from the tool side.

2. Tool support according to Claim 1, **characterised in that** a conical seating journal (24) of a tool clamp insert (23) is inserted into the conical bore (5) and the tool clamp insert (23) is detachably fastened to the tool support elements (2) by fastening elements (20, 28, 30).

3. Tool support according to Claim 2, **characterised in that** the tool clamp insert (23) has a second end face (25), and that when the tool clamp insert (23) is inserted into the conical bore (5) with its seating journal (23), the two end faces (18, 25) are held in play-free abutment against one another by the fastening elements (20).

4. Tool support according to one of the preceding claims, **characterised in that** the fastening elements (20) are arranged in the region of the first end face (18).

5. Tool support according to Claim 4, **characterised in that** the fastening elements have threaded bores (20), which are arranged axis-parallel to the conical bore (5) in the first end face (18).

6. Tool support according to one of Claims 2 to 5, **characterised in that** at least one transverse bore (21) running transversely to the axis (14) of the conical bore (5) is provided in the tool support elements.

7. Tool support according to Claim 6, **characterised by** at least one tool clamping device (33), which runs transversely to the axis of the seating journal (24) and is arranged on the tool clamp insert (23) so that it can be operated from the outside.

8. Tool support according to Claims 6 and 7, **characterised in that** the tool clamping device has a tightening screw (33), which is screwed into a corresponding threaded bore (34) of the tool clamp insert (23) and is accessible through the transverse bore (21).

9. Tool support according to Claim 8, **characterised in that** the tightening screw (33b) bears a conical clamping journal (43).

10. Tool support according to Claims 2 or 3, **characterised in that** the tool clamp insert (23c) bears an external thread (54), onto which is screwed an adjusting nut (53) of a clamping device on the tool clamp insert (23c).

11. Tool support according to Claims 2 or 3, **characterised in that** the tool clamp insert is fitted to receive a quick change insert (45), which is inserted into the clamp insert (23c) with a shaft (46) and which is detachably connected to the clamp insert.

12. Tool support according to Claims 10 and 11, **characterised in that** the quick change insert (45) bears a divided ring (51), onto which an adjusting nut (53) screwed onto a corresponding external thread (54) of the clamp insert (23c) engages.

13. Tool support according to one of the preceding claims, **characterised in that** it is configured as a tool holder.

14. Tool clamp insert for use in a tool support according to one of the preceding claims with
• a conical seating journal (24) with an angle of cone for insertion into a conical receiving bore of a collet chuck seating,
• a fine-machined end face (25), which runs at a right angle to the longitudinal central axis of the seating journal and is arranged on a part (27) projecting radially beyond the seating journal on its side facing the seating journal (24),
• fastening elements (28, 29) for the tool clamp insert, which are arranged on the radially projecting part, and
• a tool clamping device (33, 34), which can be operated radially from the outside and which is arranged on the tool clamp insert in a region on the side of the end face (25) facing the seating journal.

## Revendications

1. Porte-outil pour outils fixes ou tournants,
- avec un logement de pince de serrage (4) conçu sur des moyens porte-outil et destiné à une pince de serrage (6) servant à serrer une tige d'outil (8) depuis le côté outil, le logement de pince de serrage (4) étant pourvu d'un trou conique (5) pour recevoir une pince de serrage (6) et d'un taraudage coaxial (12) associé au trou pour recevoir un écrou de serrage (10) muni d'un filetage extérieur,
- avec, sur les moyens porte-outil (2), une première face plane usinée avec précision (18), laquelle est associée au trou conique (5), s'étend exactement à angle droit par rapport à l'axe (14) du trou et est disposée à distance axiale du trou conique (5), et
- avec, sur les moyens porte-outil, des moyens de fixation (20) indépendants du taraudage (12) et destinés à un insert de serrage d'outil (23) inséré dans le trou conique (5) avec un tenon récepteur conique (24) à la place d'une pince de serrage (6), les moyens de fixation étant accessibles par le côté outil.

2. Porte-outil selon la revendication 1, **caractérisé en ce que** dans le trou conique (5) est inséré un tenon récepteur conique (24) d'un insert de serrage d'outil (23), et l'insert de serrage d'outil (23) est fixé de manière détachable aux moyens porte-outil (2) par l'intermédiaire de moyens de fixation (20, 28, 30).

3. Porte-outil selon la revendication 2, **caractérisé en ce que** l'insert de serrage d'outil (23) comporte une seconde face plane (25), et **en ce que**, lorsque l'insert de serrage d'outil (23) est inséré par son tenon récepteur (23) dans le trou conique (5), les deux faces planes (18, 25) sont maintenues en contact sans jeu l'une contre l'autre par l'intermédiaire des moyens de fixation (20).

4. Porte-outil selon une des revendications précédentes, **caractérisé en ce que** les moyens de fixation (20) sont disposés dans des zones de la première face plane (18).

5. Porte-outil selon la revendication 4, **caractérisé en ce que** les moyens de fixation comportent des trous filetés (20) qui sont parallèles axialement au trou conique (5) ménagé dans la première face plane (18).

6. Porte-outil selon une des revendications 2 à 5, **caractérisé en ce qu'**au moins un trou transversal (21) perpendiculaire à l'axe (14) du trou conique (5) est prévu dans les moyens porte-outil.

7. Porte-outil selon la revendication 6, **caractérisé par** au moins un dispositif de serrage d'outil (33) qui s'étend transversalement à l'axe du tenon récepteur (24) et qui est disposé sur l'insert de serrage d'outil (23) avec la possibilité d'être actionné de l'extérieur.

8. Porte-outil selon les revendications 6 et 7, **caractérisé en ce que** le dispositif de serrage d'outil comporte une vis de serrage (33) qui s'engage dans un taraudage correspondant (34) de l'insert de serrage d'outil (23) et qui est accessible à travers le trou transversal (21).

9. Porte-outil selon la revendication 8, **caractérisé en ce que** la vis de serrage (33b) porte un téton de serrage conique (43).

10. Porte-outil selon la revendication 2 ou 3, **caractérisé en ce que** l'insert de serrage d'outil (23c) porte un filetage extérieur (54) sur lequel est vissé un écrou de serrage (53) d'un dispositif de serrage monté sur l'insert de serrage d'outil (23c).

11. Porte-outil selon la revendication 2 ou 3, **caractérisé en ce que** l'insert de serrage d'outil est conçu pour recevoir un insert de changement rapide (45) qui est logé dans l'insert de serrage (23c) par l'intermédiaire d'un fût (46) et qui est relié à l'insert de serrage de manière détachable.

12. Porte-outil selon les revendications 10 et 11, **caractérisé en ce que** l'insert de changement rapide (45) porte une bague segmentée (51) sur laquelle agit un écrou de serrage (53) vissé sur un filetage extérieur correspondant (54) de l'insert de serrage (23c).

13. Porte-outil selon une des revendications précédentes, **caractérisé en ce qu'**il est conformé en mandrin.

14. Insert de serrage d'outil à utiliser dans un porte-outil selon une des revendications précédentes, avec
- un tenon récepteur conique (24) avec un angle de cône à insérer dans un trou récepteur conique d'un logement de pince de serrage,
- une face plane usinée avec précision (25), laquelle s'étend à angle droit par rapport à l'axe longitudinal médian du tenon récepteur et est disposée sur une partie (27) dépassant radialement du tenon récepteur, sur le côté de cette dernière tourné vers le tenon récepteur (24),
- des moyens de fixation (28, 29) pour l'insert de serrage d'outil, lesquels sont disposés sur la partie en saillie radiale, et
- un dispositif de serrage d'outil (33, 34) qui peut être actionné radialement de l'extérieur et qui est disposé contre l'insert de serrage d'outil dans une zone située sur le côté de la face plane (25) tournée vers le tenon récepteur.
